# EUROPEAN PATENT APPLICATION

(11) **EP 1 225 195 A1**
(43) Date of publication of application: **24.07.2002**
(21) Application number: 00945961.1
(22) Date of filing: 19.07.2000
(51) Int. Cl.: C08J 5/04, C08J 5/24, C09J 131/04, C09J 133/14, C09J 133/10, D06M 15/333, A43B 9/12, A43B 15/00, C08F 218/08, C08F 220/14

(54) **THERMOCONFORMABLE AND THERMOADHESIVE REINFORCEMENT MATERIAL, PREPARATION METHOD AND ITS APPLICATION TO FOOTWEAR**

(30) Priority: 06.08.1999 ES 9901807
(71) Applicant: Quinorgan, S.L., 08110 Montcada i Reixac (ES)
(72) Inventor: MARIN APARICIO, José Maria, E-08026 Barcelona (ES); AGUILERA DEL POZO, Gloria, E-08031 Barcelona (ES); JOVE PONS, Luis, E-08329 Teia Barcelona (ES)
(74) Representative: Isern Jara, Nuria
(86) International application number: ES0000259
(87) International publication number: WO0110938

(57) **Abstract**

The reinforcement material consists of a support material made of woven or non-woven natural or artificial fibers, impregnated in bulk with thermoplastic and thermoadherent polymer resins, which can be a vinyl acetate-vinyl versatate copolymer, a vinyl acetate-methyl methacrylate-vinyl versatate copolymer, or a polyurethane. The invention also relates to a procedure for the preparation of the reinforcement material which essentially consists in immersing the support in a bath of aqueous emulsion of the polymer resins, draining, drying and cooling to obtain a dry material of the desired weight as g/cm².

The reinforcement material of the invention is used to reinforce different parts of footwear, preferably toecaps and heels.

## Description

The aim of the invention refers to a stiffening material with specific thermo-shaping and thermo-adhesive properties that can be applied for the stiffening of specific parts of footwear, especially the heel and the toecap. The invention also makes reference to the manufacturing procedure for said material.

The thermoplastic materials that are used in the footwear industry have been well known for a long time. Generally they are manufactured in sheets, which are then cut into pieces in a size and shape suitable to stiffen the heel and toecap.

These pieces are shaped with heat, and subsequently, after cooling hold the shape that they have been given.

Generally the stiffening materials are covered on one or both sides with a thermo-adhesive material so that during the shaping that can be heat fixed to the cut material (external) and to the footwear lining (internal).

The Spanish patent number 553335 proposes, as an improvement to the stiffening materials for footwear activators with solvents, the manufacture of these materials by the impregnation of differing media with resins in an emulsion of different thermo-shaping compositions, and the subsequent application of a thermo-adhesive on both sides for this purpose.

This procedure has the disadvantage of needing two production processes, first the impregnation of the media with thermo-shapable resins and second, the application of the thermo-adhesive by different known methods.

The aim of this patent application is to overcome these difficulties, improving on the material stiffening characteristics and to optimise the manufacturing method.

The aim of the invention is thus to provide a stiffening material that can be directly thermo -shaped and -adhered, within the range of temperatures normally used in the footwear industry. These temperatures are normally between 70 and 150°C depending on materials and times, without there being a second covering of any type (aqueous dispersion, "hot-melt", thermo-plastic powder, thermo-plastic film lamination, co-extrusion, etc.) as the thermo adhesive material.

The invention may be carried out by applying resin to a woven or non-woven support medium of natural or artificial fibres, with an aqueous dispersion of:
- A copolymer of vinyl versatate/vinyl acetate.
   Or
- A copolymer made up of vinyl acetate, methyl methacrylate and vinyl versatate.
   Or
- A polyurethane.

The proportions in the case of an aqueous dispersion of the copolymer of vinyl versatate/vinyl acetate are: 70-90% of vinyl acetate and 10-30% of vinyl versatate.

The proportions in the case of an aqueous dispersion of the copolymer made up of vinyl acetate/methyl methacrylate and vinyl versatate are: 50-70% vinyl acetate, 10-20% methyl methacrylate and 10-30% vinyl versatate.

The stiffening material is made up with a relationship of support media/resin of between 1/0.5 up to 1/4, preferably between 1/1 up to 1/2 all of which must be in line with the final results sought, this being in regard to the greater or lesser hardness of the reinforced material obtained.

The new stiffening material is manufactured by applying the resin by immersion of the chosen support medium in the aqueous dispersion, subsequently draining it, drying at a suitable temperature in order to form a plastic film, cooling, coiling and cutting into sheets.

The advantage of the new reinforcement material and its manufacturing process compared with the materials and procedures normally used can be summarised into three basic points:
- The unnecessary application of a thermo-adhesive at a later phase to the application of the resin to the support medium. This reduces manufacturing costs and increases the manufacturing capacity.
- The ability for the material to be slimmed down by automatic machines such as those used in the thinning of the reinforcement material formed by leather conglomerate (SALPA). The process of thinning consists of reducing the thickness around the edge of a piece of reinforcement in order to avoid it marking the cut leather. All of which has an impact on greater production.
- The fact that the adhesive is not just superficially applied, but into the complete mass of the piece, means that the slimmed down area keeps its thermo-adhesive property.

The aim of the invention will be explained below with the following examples, which are by way of explanation but not limiting.

### EXAMPLE 1

A felt manufactured from a basis of recycled synthetic and natural fibres, duly punched and calendered, with a weight of 450 g/m², is impregnated by an aqueous dispersion of a copolymer of vinyl versatate/vinyl acetate (the approximate percentage of the vinyl acetate is 80%) and then it is drained to reach a dry weight of 950 g/m². The drying is carried out in an oven at an entry temperature of 100°C and an exit temperature of 150°C.

The resulting reinforcement material obtained has a thickness of 1.8 mm, is thermo shapable and thermo-adhesive at 120°C in 20 seconds, or at 140°C in 15 seconds. The material after cooling acquires excellent rigidity and flexibility, and appropriate adhesion can be observed to the cut parts and linings tested. The material was slimmed down with an automatic machine (SALPA).

### EXAMPLE 2

A felt manufactured from first grade polyester fibres, (6 cm in length and 3.3 denier as fibre characteristics) and with a weight of 200 g/m², is impregnated by an aqueous dispersion of a copolymer made up of vinyl acetate, methyl methacrylate and vinyl versatate (the proportions being 60% vinyl acetate, 20% methyl methacrylate and 20% of vinyl versatate). The support medium is then drained to reach a dry weight of 700 g/m² after drying in a continuous oven under the same conditions as in example 1. The material obtained has a thickness of 1.2 mm with excellent hardness, it is thermo shapable and can be thermo sealed at 120°C in 15 seconds, and under a pressure of 5 kg/cm².

### EXAMPLE 3

Starting from a 400 g/m² support medium of recycled polyester fibres (punching), application of resin with an emulsion of a copolymer of vinyl acetate/methyl methacrylate vinyl versatate (VEOVA-10 from SHELL) and oven dried under identical conditions as in example 1. A reinforcement material is obtained of 950 g/m² and 1.8 mm in thickness. After being slimmed down in an automatic machine, shaped and glued at 130°C, 15 seconds and a pressure of 5 Kg/cm², a heel reinforcement material (stiffener) is obtained with characteristics similar to the first example, but with higher temperatures for softening and water resistance.

### EXAMPLE 4

Starting from a 250 g/m² natural cotton fabric (viscose warp and natural cotton weft), with the nap raising on both sides, application of resin with a polymer acetate/vinyl versatate (approximately 80-20%) and drained in order to obtain a weight of 750 g/m² under identical conditions as in example 1. A reinforcement material is obtained with a 1.2 mm in thickness. After being pre-moulded at 70°C, and thermo-sealed at 180°C for 15 seconds and a pressure of 5 Kg/cm², a stiffener is obtained with good adhesive properties on cutting and lining and an average hardness in conditions of normal room temperatures from 32°C and 68% of humidity.

### EXAMPLE 5

Starting from a 300 g/m² natural cotton fabric with the nap raising on both sides, and a polyurethane emulsion (LUPHEN D-200 A) with a 30% solid content and after applying to the fabric with the emulsion, and draining to obtain a product with a weight of 700 g/m² after oven drying under temperature conditions of between 80 and 120°C. The product obtained has excellent gluing, shaping and flexibility characteristics on being applied as a stiffener to footwear at working temperatures of between 100°-120°C (10-15 seconds) and with a pressure of 4-5 kg/cm², and cooling with a cold mould between 0°C and -5°C.

### EXAMPLE 6

With a polyurethane emulsion of the same characteristics as in example 5, the resin is applied by impregnation and drained, having the same conditions as the previous examples, a viscose fabric with the nap raising on both sides, until achieving a reinforcement of 650 g/m² dry weight, with excellent results as reinforcement for footwear, equally good for the heel stiffeners and for the toecaps as a result of the ease with which it is shaped, glued, its flexibility and its ping-pong effect. The product provides the shoe with comfort and keeps its shape perfectly. In this case cooling is also carried out, after the moulding-adhesion, in a mould with a temperature of between 0°C and -5°C.

### EXAMPLE 7

A punched and calendered polyester felt with a weight of 200 g/m² had resin applied with a polyurethane emulsion; it was drained in order to obtain a material with a 600 g/m² weight after oven drying at between 80-120°C. The resultant material has excellent adherence and flexibility when glued and moulded between the upper and the lining of the shoe under normal working conditions (100-120°C; 10-15 seconds and 4-5 kg/cm², and shock cooling between 0°C and -5°C).

## Claims

1. A reinforcement material for footwear, especially for toecaps and heels, **characterised in that** it simultaneously has properties that allow it to be thermo-shaped and thermo adhered at temperatures of 70-180°C, those normally used for these purposes in the footwear industry, and retaining these properties throughout all the phases of the footwear manufacture, being made up from a support medium made from natural or artificial woven or non-woven fibres, which are mass impregnated with resins of thermo-plastic and thermo-adhesive polymers, also being able to carry or not inert fillers, colourings or organic or inorganic pigments.

2. A reinforcement material according to claim 1, **characterised in that** the resin for impregnation of the support is a copolymer of vinyl acetate/vinyl versatate with a composition of 70-90% vinyl acetate and 10-30% vinyl versatate, preferably 80-20% by weight.

3. A reinforcement material according to claim 1, **characterised in that** the support impregnation resin is a copolymer of vinyl acetate/methyl methacrylate/vinyl versatate, with a composition of 50-70% vinyl acetate, 10-20% methyl methacrylate and 10-30% vinyl versatate, preferably 60-20-20% by weight.

4. A reinforcement material, according to claim 1, **characterised in that** the support impregnation resin is a polyurethane.

5. A reinforcement material according to claim 1, **characterised in that** the weight relationship between the support medium and the resins of thermo-plastic and thermo-adhesive polymers is made up from between 1/0.5 up to 1/4, preferably between 1/1 and 1/2.

6. Procedure for the preparation of a footwear reinforcing material, according to claims 1 to 4, **characterised in that** in one single stage the thermo-shaping and thermo-adhesion is achieved by submerging the support medium in a bath of an aqueous emulsion of the chosen thermo-plastic and thermo-adhesive resins, being subsequently drained and then dried at temperatures and times that are suitable in order to obtain a dry material with a specified g/cm² weight.

7. Procedure for the preparation, according to claim 6, **characterised in that** the drying temperature is included within the range of 80-180°C, preferably 100-150°C.

8. Procedure for the preparation, according to claim 6, **characterised in that** the degree of draining and drying is such that it provides a reinforcement material that has a weight of between 200 and 2,000 g/m².

9. Usage of the reinforcement material according to claim 1 in order to stiffen various parts of footwear, preferably the toecaps and heel, **characterised in that** the processes for the thermo-shaping and thermo-adhesion are carried out at temperatures of 70-180°C, preferably 100-130°C, for a period of time of 10-20 seconds, and under a pressure of 4-5 kg/cm², and in the case of using polyurethane, proceeding with a final mould cooling at temperatures of between 0°C and -5°C.
